(19) Europäisches Patentamt
European Patent Office
Office européen des brevets

(11) EP 2 250 214 B1

(12) EUROPÄISCHE PATENTSCHRIFT

(45) Veröffentlichungstag und Bekanntmachung des Hinweises auf die Patenterteilung:
15.05.2013 Patentblatt 2013/20

(51) Int Cl.:
C08G 77/12 (2006.01)    C08G 77/46 (2006.01)

(21) Anmeldenummer: 09718225.7

(22) Anmeldetag: 03.03.2009

(86) Internationale Anmeldenummer:
PCT/EP2009/052479

(87) Internationale Veröffentlichungsnummer:
WO 2009/109560 (11.09.2009 Gazette 2009/37)

(54) **VERFAHREN ZUR HERSTELLUNG VON SILICONPOLYETHERN**

METHOD FOR PRODUCING SILICONE POLYETHERS

PROCÉDÉ DE FABRICATION DE POLYÉTHERS DE SILICONE

(84) Benannte Vertragsstaaten:
AT BE BG CH CY CZ DE DK EE ES FI FR GB GR HR HU IE IS IT LI LT LU LV MC MK MT NL NO PL PT RO SE SI SK TR

(30) Priorität: 05.03.2008 DE 102008000525

(43) Veröffentlichungstag der Anmeldung:
17.11.2010 Patentblatt 2010/46

(73) Patentinhaber: Wacker Chemie AG
81737 München (DE)

(72) Erfinder: HERZIG, Christian
83329 Waging (DE)

(74) Vertreter: Deffner-Lehner, Maria et al
Wacker Chemie AG
Zentralbereich Patente, Marken und Lizenzen
Hanns-Seidel-Platz 4
81737 München (DE)

(56) Entgegenhaltungen:
DE-T2- 69 918 588     US-B1- 6 576 623

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Herstellung von Siliconpolyethern.

In DE 31 33 869 C1 (korrespondierende US 4,417,068 A) ist allgemein die Herstellung von Siliconpolyethern aus Hydrogensiloxanen und Alkenylpolyethern in einer edelmetallkatalysierten Hydrosilylierungsreaktion beschrieben. Die Beispiele zeigen den Einfluss von Katalysatormenge und Katalysatorstruktur auf den Umsatz der SiH-Gruppen. Der in einem Zeitintervall erzielbare SiH-Umsatz kann bei feststehendem Katalysatortyp nur durch erheblich höhere Edelmetallkonzentrationen wesentlich erhöht werden, was aber aufwendig und daher nachteilig ist.

In DE 699 18 588 T2 ist ein kontinuierliches Verfahren beschrieben, bei dem olefinische Verbindungen, wie ungesättigte Polyether, mit Hydrogensiloxanen in Gegenwart von Hydrosilylierungskatalysatoren in einem oder mehreren Tankreaktoren umgesetzt werden, wobei ein oder beide Reaktanten auch in den zweiten und die nachfolgenden Tankreaktoren eingespeist werden können. Als Hydrogensiloxane können Mischungen von Hydrogensiloxanen mit verschiedenem Molekulargewicht und molekularer Struktur eingesetzt werden.

Ein grundsätzliches Problem bei der Herstellung von Siliconpolyethern ist die geringe Mischbarkeit der polymeren Einsatzstoffe, was in der Regel dazu führt, dass das Reaktionsgemisch anfangs zweiphasig ist und die Herstellung erst mal sehr zögernd abläuft.

Wie aus US 5,869,727 bekannt ist, lässt sich dieser Nachteil durch Zusatz flüchtiger Lösemittel beseitigen, die nach Abschluss der Synthese wieder abdestilliert werden können. Der Vorteil einer schnelleren Reaktionskinetik wird durch den Nachteil einer längeren Produktaufarbeitung sowie einer schlechteren Raum-Zeit-Ausbeute erkauft.

Es bestand daher die Aufgabe, ein Verfahren bereitzustellen, bei dem die oben genannten Nachteile vermieden werden und bei dem der Umsatz der SiH-Gruppen verbessert wird.

Die Aufgabe wird durch die Erfindung gelöst.

Gegenstand der Erfindung ist ein Verfahren zur Herstellung von Siliconpolyethern, bei dem

(i) in einem ersten Schritt

ungesättigte Polyether (3) der allgemeinen Formel

$$CH_2=CR^1-(CH_2)_aO(C_2H_4O)_b(C_3H_6O)_cR^1 \qquad (I),$$

wobei

$R^1$ ein Wasserstoffatom oder einen Kohlenwasserstoffrest mit 1 bis 6 Kohlenstoffatomen bedeutet,

a 0 oder eine ganze Zahl von 1 bis 16 ist,

b 0 oder eine ganze Zahl von 1 bis 50 ist und

c 0 oder eine ganze Zahl von 1 bis 50 ist,

mit Organopolysiloxanen (1), die einen Gehalt von 0,2 bis 1,6 Gew.-% Si-gebundene Wasserstoffatome aufweisen, umgesetzt werden und

(ii) in einem zweiten Schritt,

Organopolysiloxane (2), die einen Gehalt von 0,02 bis 1,0 Gew.-% Si-gebundene Wasserstoffatome aufweisen, zum Umsetzungsgemisch des ersten Schrittes zugegeben werden, mit der Maßgabe, dass die Umsetzungen im ersten und zweite Schritt in Gegenwart von die Anlagerung von Si-gebundenen Wasserstoff an aliphatische Doppelbindungen fördernde Katalysatoren (4) durchgeführt werden,

dass die Organopolysiloxane (1) verschieden von den Organopolysiloxanen (2) sind, da die Organopolysiloxane (1) kurzkettiger und SiH-Gruppen reicher sind und damit die Gew.-% an Si-gebundenem Wasserstoff in (1) höher sind als in (2), und dass das Verhältnis der Gewichtskonzentration von Si-gebundenem Wasserstoff in Organopolysiloxan (1) zur Gewichtskonzentration von Si-gebundenem Wasserstoff in Organopolysiloxan (2) mindestens 1,5 beträgt.

Besonders bevorzugt beträgt bei dem erfindungsgemäßen Verfahren das Verhältnis der Gewichtskonzentration von Si-gebundenem Wasserstoff in Organopolysiloxan (1) zur Gewichtskonzentration von Si-gebundenem Wasserstoff in Organopolysiloxan (2) mindestens 2,0, wobei besonders schnelle und vollständige Umsätze erreicht werden.

Vorzugsweise beträgt bei dem erfindungsgemäßen Verfahren das Verhältnis der Gewichtskonzentration von Si-gebundenem Wasserstoff in Organopolysiloxan (1) zur Gewichtskonzentration von Si-gebundenem Wasserstoff in Organopolysiloxan (2) höchstens 50, bevorzugt höchstens 20.

Im ersten Schritt des erfindungsgemäßen Verfahrens werden Organopolysiloxane (1) vorzugsweise in Mengen von 0,2 bis 0,7, bevorzugt 0,3 bis 0,6 Grammatom Si-gebundenen Wasserstoff je Mol aliphatischer Doppelbindung in den Polyethern (3) eingesetzt.

Im zweiten Schritt des erfindungsgemäßen Verfahrens werden Organopolysiloxane (2) vorzugsweise in Mengen von 0,1 bis 0,6, bevorzugt 0,2 bis 0,5 Grammatom Si-gebundenen Wasserstoff je Mol aliphatischer Doppelbindung in den Polyethern (3) eingesetzt.

Bei dem erfindungsgemäßen Verfahren werden Organopolysiloxane (1) und (2) insgesamt vorzugsweise in Mengen von 0,5 bis 1,0, bevorzugt 0,6 bis 0,8 Grammatom Si-gebundenen Wasserstoff je Mol aliphatischer Doppelbindung in den Polyethern (3) eingesetzt.

Als Organopolysiloxane (1) werden vorzugsweise lineare, cyclische oder verzweigte Organopolysiloxane aus Einheiten der allgemeinen Formel

$$R_e H_f SiO_{\frac{4-e-f}{2}} \quad (II),$$

wobei

R gleich oder verschieden sein kann und einen einwertigen, von aliphatischen Kohlenstoff-Kohlenstoff-Mehrfachbindungen freien, Kohlenwasserstoffrest mit 1 bis 18 Kohlenstoffatomen bedeutet, e 0, 1, 2 oder 3,
f 0, 1 oder 2
und die Summe von $e+f \leq 3$ ist,
eingesetzt, mit der Maßgabe, dass mindestens 2 Si-gebundene Wasserstoffatome enthalten sind.

Bevorzugt werden als Organopolysiloxane (1) solche der allgemeinen Formel

$$H_h R_{3-h} SiO(SiR_2 O)_o (SiRHO)_p SiR_{3-h} H_h \qquad (III)$$

wobei R die oben dafür angegebene Bedeutung hat,
h 0, 1 oder 2, bevorzugt 0 oder 1,
o 0 oder eine ganze Zahl von 1 bis 40, bevorzugt 2 bis 20, und
p 0 oder eine ganze Zahl von 1 bis 40, bevorzugt 2 bis 20, ist, eingesetzt, mit der Maßgabe, dass mindestens 2 Si-gebundene Wasserstoffatome enthalten sind.

Im Rahmen dieser Erfindung soll Formel (III) so verstanden werden, dass o Einheiten - (SiR$_2$O)- und p Einheiten -(SiRHO)- in beliebiger Weise, beispielsweise als Block oder statistisch, im Organopolysiloxanmolekül verteilt sein können.

Beispiele für solche Organopolysiloxane (1) sind insbesondere Mischpolymerisate aus Trimethylsiloxan-, Dimethylsiloxan- und Methylhydrogensiloxaneinheiten, Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Methylhydrogensiloxan- und Trimethylsiloxaneinheiten, Mischpolymerisate aus Methylhydrogensiloxan-, Diphenylsiloxan- und Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogensiloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxan- und/oder Phenylmethylsiloxaneinheiten.

Die Organopolysiloxane (1) besitzen eine durchschnittliche Viskosität von vorzugsweise 0,5 bis 50 mm$^2$/s bei 25°C, bevorzugt 2 bis 20 mm$^2$/s bei 25°C.

Als Organopolysiloxane (2) werden vorzugsweise lineare, cyclische oder verzweigte Organopolysiloxane aus Einheiten der allgemeinen Formel

$$R_k H_l SiO_{\frac{4-k-l}{2}} \quad (IV),$$

wobei

R gleich oder verschieden sein kann und einen einwertigen, von aliphatischen Kohlenstoff-Kohlenstoff-Mehrfachbindungen freien, Kohlenwasserstoffrest mit 1 bis 18 Kohlenstoffatomen bedeutet, k 0, 1, 2 oder 3,
l 0, 1 oder 2
und die Summe von $k+l \leq 3$ ist,
eingesetzt, mit der Maßgabe, dass mindestens 2 Si-gebundene Wasserstoffatome enthalten sind.

Bevorzugt werden als Organopolysiloxane (2) solche der allgemeinen Formel

$$H_gR_{3-g}SiO(SiR_2O)_r(SiRHO)_sSiR_{3-g}H_g \qquad (V)$$

wobei R die oben dafür angegebene Bedeutung hat,

g 0, 1 oder 2, bevorzugt 0 oder 1,

r 0 oder eine ganze Zahl von 1 bis 500, bevorzugt 20 bis 200, und

s 0 oder eine ganze Zahl von 1 bis 100, bevorzugt 2 bis 50, ist,

eingesetzt, mit der Maßgabe, dass mindestens 2 Si-gebundene Wasserstoffatome enthalten sind.

Im Rahmen dieser Erfindung soll Formel (V) so verstanden werden, dass r Einheiten - $(SiR_2O)$- und s Einheiten -$(SiRHO)$- in beliebiger Weise, beispielsweise als Block oder statistisch, im Organopolysiloxanmolekül verteilt sein können.

Beispiele für Organopolysiloxane (1) gelten im vollen Umfang auch für Organopolysiloxane (2).

Die Organopolysiloxane (2) besitzen eine durchschnittliche Viskosität von vorzugsweise 5 bis 5000 $mm^2$/s bei 25°C, bevorzugt 20 bis 500 $mm^2$/s bei 25°C.

Das Verhältnis der Viskositäten von Organopolysiloxane (2) zu Organopolysiloxane (1) beträgt vorzugsweise mindestens 1,0, bevorzugt mindestens 2,0, besonders bevorzugt mindestens 3,0. Vorzugsweise beträgt das Viskositätsverhältnis von Organopolysiloxane (2) zu Organopolysiloxane (1) vorzugsweise höchstens 1000, bevorzugt höchstens 100.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der $\alpha$- und der $\beta$-Phenylethylrest.

Beispiele für Kohlenwasserstoffreste $R^1$ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexyl- und der iso-Hexylrest.

Bevorzugt als Rest $R^1$ ist ein Wasserstoffatom.

Als Polyether (3) können entweder eine Art oder mehrere Arten von Polyethern der Formel (I) eingesetzt werden. Bevorzugt ist aber die Verwendung einer Art von Polyethern (3), die mit den Organopolysiloxanen (1) und (2) umgesetzt werden.

Vorzugsweise ist a in Formel (I) 1 und es werden vorzugsweise Allylpolyether eingesetzt.

Beispiele für Polyether (3) sind

$CH_2$=CH-$CH_2$O $(C_2H_4O)$ $_5$H, $CH_2$=CH-$CH_2$O $(C_2H_4O)$ $_8$H,

$CH_2$=CH-$CH_2$O $(C_2H_4O)$ $_{12}$-$CH_3$, $CH_2$=CH-$CH_2$O $(C_3H_6O)$ $_6$H,

$CH_2$=CH-$CH_2$O $(C_3H_6O)$ $_{18}$H, $CH_2$=CH-$CH_2$O $(C_2H_4O)$ $_{15}$ $(C_3H_6O)$ $_{15}$H,

$CH_2$=CH-$CH_2$O $(C_2H_4O)$ $_6$ $(C_3H_6O)$ $_{44}$C $(=O)$ $CH_3$.

Als die Anlagerung von Si-gebundenem Wasserstoff an aliphatische Doppelbindung fördernde Katalysatoren (4) können auch bei dem erfindungsgemäßen Verfahren die gleichen Katalysatoren eingesetzt werden, die auch bisher zur Förderung der Anlagerung von Si-gebundenem Wasserstoff an aliphatische Doppelbindung eingesetzt werden konnten. Bei den Katalysatoren handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxid, Aluminiumoxid oder Aktivkohle befinden kann, Verbindungen oder Komplexe von Platin, wie Platinhalogenide, z.B. $PtCl_4$, $H_2PtCl_6$*$6H_2O$, $Na_2PtCl_4$*$4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungs-produkten aus $H_2PtCl_6$*$6H_2O$ und Cyclohexanon, Platin-Vinyl-siloxankomplexe, wie Platin-1,3-Divinyl-1,1,3,3-tetramethyl-disiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-di-chlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin oder Ammonium-Platinkomplexe.

Der Katalysator (4) wird bei dem erfindungsgemäßen Verfahren vorzugsweise in Mengen von 1 bis 50 Gew.-ppm (Gewichtsteilen je Million Gewichtsteilen), bevorzugt in Mengen von 5 bis 20 Gew.-ppm, jeweils berechnet als elementares Platin und bezogen auf das Gesamtgewicht der eingesetzten Komponenten (1), (2) und (3), eingesetzt.

Vorzugsweise wird beim erfindungsgemäßen Verfahren der Katalysator (4) zu Polyether (3) vor der Zudosierung der Organopolysiloxane (1) und (2) zugegeben. Bevorzugt wird ein Teil der Menge des Katalysators im ersten Schritt vorgelegt und im zweiten Schritt die restliche Menge des Katalysators zugegeben.

Das erfindungsgemäße Verfahren wird vorzugsweise bei einer Temperatur von 60 bis 120°C, bevorzugt 80 bis 120°C durchgeführt. Vorzugsweise wird das erfindungsgemäße Verfahren beim Druck der umgebenden Atmosphäre, also etwa bei 1020 hPa durchgeführt, es kann aber auch bei höheren oder niedrigeren Drücken durchgeführt werden.

Bei dem erfindungsgemäßen Verfahren können Lösungsmittel mitverwendet werden. Beispiele für Lösungsmittel sind Toluol, Xylol, iso-Propanol, n-Butanol.

Wenn Lösungsmittel mitverwendet werden, werden sie vorzugsweise in Mengen von 5 bis 20 Gew.-% bezogen auf das Reaktionsgemisch eingesetzt.

Die Mitverwendung von Lösungsmittel ist aber nicht bevorzugt.

Nach dem erfindungsgemäßen Verfahren werden als Siliconpolyether vorzugsweise lineare, cyclische oder verzweigte Organopolysiloxane aus Einheiten der allgemeinen Formel

$$A_xR_ySiO_{\frac{4-x-y}{2}} \quad (VI),$$

wobei
A einen Polyetherrest der allgemeinen Formel

$$-CH_2-CR^1-(CH_2)_aO(C_2H_4O)_b(C_3H_6O)_cR^1 \qquad (VII),$$

bedeutet,
R, R$^1$, a, b und c die oben dafür angegebene Bedeutung haben,
x 0, 1 oder 2,
y 0, 1, 2 oder 3,
und die Summe von x+y$\leq$3 ist,
erhalten, mit der Maßgabe, dass mindestens 2 Polyetherreste A enthalten sind.

Bevorzugt werden nach dem erfindungsgemäßen Verfahren als Siliconpolyether solche der allgemeinen Formel

$$A_zR_{3-z}SiO(SiR_2O)_m(SiRAO)_nSiR_{3-z}A_z \qquad (VIII)$$

wobei
A und R die oben dafür angegebene Bedeutung haben,
z 0, 1 oder 2, bevorzugt 0 oder 1,
m 0 oder eine ganze Zahl von 1 bis 300, bevorzugt 10 bis 150, und
n 0 oder eine ganze Zahl von 1 bis 50, bevorzugt 2 bis 30, ist, erhalten, mit der Maßgabe, dass mindestens 2 Polyetherreste A enthalten sind.

Im Rahmen dieser Erfindung soll Formel (VIII) so verstanden werden, dass m Einheiten -(SiR$_2$O)- und n Einheiten -(SiRAO)- in beliebiger Weise, beispielsweise als Block oder statistisch, im Organopolysiloxanmolekül verteilt sein können.

Die nach dem erfindungsgemäßen Verfahren erhaltenen Siliconpolyether besitzen eine Viskosität von vorzugsweise 50 bis 100000 mPa.s bei 25°C, bevorzugt 100 bis 20000 mPa.s bei 25°C.

Das erfindungsgemäße Verfahren hat den Vorteil, dass hohe SiH-Umsätze erzielt werden. Vorzugsweise wird ein SiH-Umsatz von mindestens 94 %, bevorzugt von 96 % erzielt. Vorzugsweise sind nach dem erfindungsgemäßen Verfahren in den erhaltenen Siliconpolyethern höchstens 0,01 Gew.-%, bevorzugt höchstens 0,005 Gew.-% SiH-Gruppen vorhanden.

Beispiel 1:

773 g eines Allylpolyethoxylats mit der Jodzahl von 53,3 (entsprechend 1,54 Equiv. C=C) werden mit 0,3 g Cyclohexenoxid und 1,04 g einer Lösung von Hexachloroplatinsäure in Isopropanol (entsprechend 5 mg Pt) aktiviert und unter N$_2$-Atmosphäre auf 100°C erwärmt. Nach Zudosieren von 87 g eines Organopolysiloxans (H-Siloxan 1) bestehend aus Hydrogenmethylsiloxan-, Dimethylsiloxan- und Trimethylsiloxaneinheiten, das 0,63 Gew.-% Si-gebundenen Wasserstoff und eine durchschnittliche Kettenlänge von 10,2 Si-Atomen aufweist (entsprechend 0,55 Equiv. SiH), innerhalb von 30 Minuten und weiteren 30 Minuten Nachreaktion werden ca. 350 g kurzkettiger Siliconpolyether gelöst in 470 g Allylpolyether erhalten. Bei 100°C werden unter Kühlen 177 g eines ähnlichen Organopolysiloxans (H-Siloxan 2) wie H-Siloxan 1, das aber 0,31 Gew.-% Si-gebundenen Wasserstoff und eine durchschnittliche Kettenlänge von 39 Si-Atomen aufweist (entsprechend 0,55 Equiv. SiH), zudosiert, und gleichzeitig noch mal dieselbe Menge Pt-Katalysator zugegeben.

Der gesamte Ansatz enthält 10,0 ppm Pt-Gehalt. Das Verhältnis der Gewichtskonzentration von Si-gebundenem Wasserstoff in H-Siloxan 1 zur Gewichtskonzentration von Si-gebundenem Wasserstoff in H-Siloxan 2 beträgt 2,03. Es wurde insgesamt ein C=C/SiH-Verhältnis von 1,40 (bzw. SiH/C=C-Verhältnis von 0,71) eingesetzt. 91 Minuten nach Dosierbeginn des H-Siloxans 2 wird das Reaktionsgemisch erneut klar. Nach einer weiteren Stunde sind nur noch 3,6 Gew.-% des eingesetzten Si-gebundenen Wasserstoffs (SiH-Umsatz von 96,4 %) vorhanden. Der erhaltene Siliconpolyether hat eine Viskosität von 495 $mm^2$/s (25 °C) und enthält 0,0038 Gew.-% Si-gebundenen Wasserstoff.

Vergleichsversuch:

Bei einem C=C/SiH-Verhältnis von 1,40 analog zu Beispiel 1 werden 667 g des Allylpolyethoxylats aus Beispiel 1 bei 100°C mit 322 g des gleichen Organopolysiloxans (H-Siloxan 2) aus Beispiel 1, das 0,31 Gew.-% Si-gebundenen Wasserstoff und eine durchschnittliche Kettenlänge von 39 Si-Atomen aufweist, umgesetzt. Das Gemisch enthält wie in Beispiel 1 5 mg Pt in identischer Form und 0,3 g Cyclohexenoxid. Nach Dosierende wird noch mal dieselbe Menge Pt-Katalysator zugegeben. Nach weiteren 80 Minuten Reaktionszeit bei gleicher Temperatur (190 Minuten nach Dosierbeginn) enthält das Reaktionsgemisch noch 10,4 Gew-% des eingesetzten Si-gebundenen Wasserstoffs (SiH-Umsatz von 89,6 %), nach einer weiteren Stunde immer noch 6,1 Gew.-% (SiH-Umsatz von 93,9 %). Damit ist die Hydrosilylierung langsamer und weniger vollständig als wenn sie durch die Hydrosilylierung in zwei Schritten gemäß Beispiel 1 mit dem H-Siloxans 1 und H-Siloxans 2 durchgeführt wird, wobei das H-Siloxan 1, da es kurzkettiger und SiH-Gruppen reicher ist, verschieden von dem H-Siloxan 2 ist.

Beispiel 2:

Beispiel 1 wird sinngemäß wiederholt, aber mit der Änderung, dass die Herstellung eines Siliconpolyethers in der doppelten Menge eines zuvor hergestellten anderen Siliconpolyethers erfolgt. Dazu werden 1100 g des Allylpolyethers (entsprechend 2,31 Equiv. C=C) aus Beispiel 1 mit 0,4 g Cyclohexenoxid und 1,52 g der Pt-Katalysatorlösung (entsprechend 7,3 mg Pt) aus Beispiel 1 aktiviert und unter $N_2$-Atmosphäre auf 100°C erwärmt. Nach Zudosieren von 174 g des gleichen Organopolysiloxans, H-Siloxan 1, aus Beispiel 1 innerhalb von 30 Minuten und weiteren 30 Minuten Nachreaktion werden ca. 700 g kurzkettiger Siliconpolyether gelöst in Allylpolyether erhalten.

Daraufhin wird die Hydrosilylierung mit dem gleichen Organopolysiloxan, H-Siloxan 2, wie aus Beispiel 1 und mit den identischen Mengen wie in Beispiel 1 durchgeführt. Das Reaktionsgemisch wird diesmal schon 45 Minuten nach Dosierbeginn erneut klar und nach einer weiteren Stunde sind nur noch 3,5 Gew.-% des eingesetzten Si-gebundenen Wasserstoffs (SiH-Umsatz von 96,5 %) vorhanden. Die Reaktion verläuft noch schneller als in Beispiel 1 und weit schneller als die Reaktion im Stand der Technik gemäß Vergleichsversuch verläuft. Der erhaltene Siliconpolyether enthält 0,0040 Gew.-% Si-gebundenen Wasserstoff. Aufgrund des höheren Anteils des niedermolekularen Siliconpolyethers ist die Viskosität des Produkts niedriger als in Beispiel 1 und hat einen Wert von 347 $mm^2$/s (25°C).

Da die Mengen von H-Siloxan 1 und H-Siloxan 2 gegeneinander lückenlos variiert werden können, lassen sich auch beliebige Produktviskositäten in weiten Bereichen erzielen.

Beispiel 3:

In diesem Beispiel werden die Siloxane 1 und 2 nicht nacheinander, sondern gleichzeitig dosiert, so dass sich die eine Art von Siliconpolyether während der Herstellung der zweiten Art von Siliconpolyether bildet.

Beispiel 1 wird also in der Weise wiederholt, dass die identischen Einsatzstoffe in insgesamt der gleichen Menge verwendet werden, nur mit dem Unterschied, dass die 87 g H-Siloxan 1 und 177 g H-Siloxan 2 homogen gemischt und damit exakt gleichzeitig dosiert werden, und die zweite Menge Platin-Katalysator direkt danach zugegeben wird. Die Konzentration an Reaktivstoffen ist damit genau gleich der in Beispiel 1. Vom Dosierbeginn gemessen wird das Reaktionsgemisch diesmal nach 93 Minuten klar, was nur wenig länger ist, als dem Aufklaren nach Dosieren von H-Siloxan 2 in Beispiel 1 entspricht. Nach einer weiteren Stunde bei 100°C werden nur noch 4,5 Gew.-% des eingesetzten Si-gebundenen Wasserstoffs (SiH-Umsatz von 95,5 %) gemessen. Der erhaltene Siliconpolyether hat eine Viskosität von 490 $mm^2$/s (25°C) und weist eine ähnliche Viskosität wie Beispiel 1 auf.

Der SiH-Umsatz ist niedriger als der in Beispiel 1, aber trotz kürzerer Reaktionszeit wesentlich besser als im Vergleichsbeispiel.

**Patentansprüche**

**1.** Verfahren zur Herstellung von Siliconpolyethern, bei dem

(i) in einem ersten Schritt
ungesättigte Polyether (3) der allgemeinen Formel

$$CH_2=CR^1\text{-}(CH_2)_aO(C_2H_4O)_b(C_3H_6O)_cR^1 \quad (I),$$

wobei
$R^1$ ein Wasserstoffatom oder einen Kohlenwasserstoffrest mit 1 bis 6 Kohlenstoffatomen bedeutet,
a 0 oder eine ganze Zahl von 1 bis 16 ist,
b 0 oder eine ganze Zahl von 1 bis 50 ist und
c 0 oder eine ganze Zahl von 1 bis 50 ist,
mit Organopolysiloxanen (1), die einen Gehalt von 0,2 bis 1,6 Gew.-% Si-gebundenen Wasserstoff aufweisen, umgesetzt werden und
(ii) in einem zweiten Schritt,

Organopolysiloxane (2), die einen Gehalt von 0,02 bis 1,0 Gew.-% Si-gebundenen Wasserstoff aufweisen, zum Umsetzungsgemisch des ersten Schrittes zugegeben werden,
mit der Maßgabe, dass die Umsetzungen im ersten und zweiten Schritt in Gegenwart von die Anlagerung von Si-gebundenen Wassserstoff an aliphatische Doppelbindungen fördernde Katalysatoren (4) durchgeführt werden, dass die Organopolysiloxane (1) verschieden von den Organopolysiloxanen (2) sind, da die Organopolysiloxane (1) kurzkettiger und SiH-Gruppen reicher sind und damit die Gew.-% an Si-gebundenem Wasserstoff in (1) höher sind als in (2),und dass das Verhältnis der Gewichtskonzentration von Si-gebundenem Wasserstoff in Organopolysiloxan (1) zur Gewichtskonzentration von Si-gebundenem Wasserstoff in Organopolysiloxan (2) mindestens 1,5 beträgt.

2. Verfahren nach Anspruch 1, **dadurch gekennzeichnet, dass** im ersten Schritt Organopolysiloxan (1) in Mengen von 0,2 bis 0,7 Grammatom Si-gebundener Wasserstoff je Mol aliphatische Doppelbindung im Polyether (3) eingesetzt wird.

3. Verfahren nach Anspruch 1 oder 2, **dadurch gekennzeichnet, dass** im zweiten Schritt Organopolysiloxan (2) in Mengen von 0,1 bis 0,6 Grammatom Si-gebundener Wasserstoff je Mol aliphatische Doppelbindung im Polyether (3) eingesetzt wird.

4. Verfahren nach einem der Ansprüche 1 bis 3, **dadurch gekennzeichnet, dass** Organopolysiloxane (1) und (2) insgesamt in Mengen von 0,5 bis 1,0 Grammatom Si-gebundener Wasserstoff je Mol aliphatische Doppelbindung im Polyether (3) eingesetzt werden.

5. Verfahren nach einem der Ansprüche 1 bis 4, **dadurch gekennzeichnet, dass** als Organopolysiloxane (1) solche der allgemeinen Formel

$$H_hR_{3-h}SiO(SiR_2O)_o(SiRHO)_pSiR_{3-h}H_h \quad (III)$$

wobei R die oben dafür angegebene Bedeutung hat,
h 0, 1 oder 2,
o 0 oder eine ganze Zahl von 1 bis 40 und
p 0 oder eine ganze Zahl von 1 bis 40 ist,
eingesetzt werden, mit der Maßgabe dass mindestens 2 Si-gebundene Wasserstoffatome enthalten sind.

6. Verfahren nach einem der Ansprüche 1 bis 5, **dadurch gekennzeichnet, dass** als Organopolysiloxane (2) solche der allgemeinen Formel

$$H_gR_{3-g}SiO(SiR_2O)_r(SiRHO)_sSiR_{3-g}H_g \quad (V)$$

wobei R die oben dafür angegebene Bedeutung hat,
g 0, 1 oder 2,
r 0 oder eine ganze Zahl von 1 bis 500 und
s 0 oder eine ganze Zahl von 1 bis 100 ist,
eingesetzt werden, mit der Maßgabe dass mindestens 2 Si-gebundene Wasserstoffatome enthalten sind.

**Claims**

1. Method for producing silicone polyethers wherein

   (i) in a first step
   unsaturated polyethers (3) of the general formula

   $$CH_2=CR^1-(CH_2)_aO(C_2H_4O)_b(C_3H_6O)_cR^1 \quad (I),$$

   where
   $R^1$ is a hydrogen atom or a hydrocarbyl radical having 1 to 6 carbon atoms,
   a is 0 or an integer from 1 to 16,
   b is 0 or an integer from 1 to 50, and
   c is 0 or an integer from 1 to 50,
   are reacted with organopolysiloxanes (1), which contain from 0.2% to 1.6% by weight of silicon bonded hydrogen, and
   (ii) in a second step,

   organopolysiloxanes (2), which contain from 0.02% to 1.0% by weight of silicon bonded hydrogen,
   are added to the reaction mixture of the first step, with the proviso that the reactions in the first and second steps are carried out in the presence of catalysts (4), which promote the addition of silicon bonded hydrogen onto aliphatic double bonds,
   that said organopolysiloxanes (1) differ from said organopolysiloxanes (2) in that said organopolysiloxanes (1) have a shorter chain length and are richer in SiH groups and hence the % by weight of silicon bonded hydrogen is higher in (1) than in (2), and that the ratio of the weight concentration of silicon bonded hydrogen in organopolysiloxane (1) to the weight concentration of silicon bonded hydrogen in organopolysiloxane (2) is at least 1.5.

2. Method according to Claim 1, **characterized in that** the first step utilizes organopolysiloxane (1) in amounts of 0.2 to 0.7 gram atom of silicon bonded hydrogen per mole of aliphatic double bond in polyether (3).

3. Method according to Claim 1 or 2, **characterized in that** the second step utilizes organopolysiloxane (2) in amounts of 0.1 to 0.6 gram atom of silicon bonded hydrogen per mole of aliphatic double bond in polyether (3).

4. Method according to any one of Claims 1 to 3, **characterized in that** organopolysiloxanes (1) and (2) are used altogether in amounts of 0.5 to 1.0 gram atom of silicon bonded hydrogen per mole of aliphatic double bond in polyether (3).

5. Method according to any one of Claims 1 to 4, **characterized in that** organopolysiloxanes (1) used comprise organopolysiloxanes of the general formula

   $$H_hR_{3-h}SiO(SiR_2O)_o(SiRHO)_pSiR_{3-h}H_h \quad (III)$$

   where R is as defined above,
   h is 0, 1 or 2,
   o is 0 or an integer from 1 to 40 and
   p is 0 or an integer from 1 to 40,
   with the proviso that at least two silicon bonded hydrogen atoms are included.

6. Method according to any one of Claims 1 to 5, **characterized in that** organopolysiloxanes (2) used comprise organopolysiloxanes of the general formula

   $$H_gR_{3-g}SiO (SiR_2O)_r(SiRHO)_sSiR_{3-g}H_g \quad (V)$$

   where R is as defined above,
   g is 0, 1 or 2,
   r is 0 or an integer from 1 to 500, and
   s is 0 or an integer from 1 to 100,
   with the proviso that at least 2 silicon bonded hydrogen atoms are included.

**Revendications**

1. Procédé pour la préparation de polyéthers de silicone, dans lequel

   (i) dans une première étape
   on fait réagir des polyéthers insaturés (3) de formule générale

   $$CH_2=CR^1-(CH_2)_aO(C_2H_4O)_b(C_3H_6O)_cR^1 \qquad (I),$$

   dans laquelle
   $R^1$ représente un atome d'hydrogène ou un radical hydrocarboné ayant de 1 à 6 atomes de carbone,
   a est 0 ou un nombre entier valant de 1 à 16,
   b est 0 ou un nombre entier valant de 1 à 50 et
   c est 0 ou un nombre entier valant de 1 à 50,
   avec des organopolysiloxanes (1) qui présentent une teneur de 0,2 à 1,6 % en poids en hydrogène lié à Si, et
   (ii) dans une deuxième étape

   on ajoute au mélange réactionnel de la première étape des organopolysiloxanes (2) qui présentent une teneur de 0,02 à 1,0 % en poids en hydrogène lié à Si,
   étant entendu que les réactions dans les première et deuxième étapes sont effectuées en présence de catalyseurs (4) facilitant la fixation par addition d'hydrogène lié à Si sur des doubles liaisons aliphatiques,
   que les organopolysiloxanes (1) sont différents des organopolysiloxanes (2), car les organopolysiloxanes (1) sont à plus courte chaîne et plus riches en groupes SiH et donc les % en poids d'hydrogène lié à Si dans (1) sont plus élevés que dans (2), et que le rapport de la concentration en poids d'hydrogène lié à Si dans l'organopolysiloxane (1) à la concentration en poids d'hydrogène lié à Si dans l'organopolysiloxane (2) est d'au moins 1,5.

2. Procédé selon la revendication 1, **caractérisé en ce que** dans la première étape on utilise l'organopolysiloxane (1) en des quantités de 0,2 à 0,7 atome-gramme d'hydrogène lié à Si par mole de double liaison aliphatique dans le polyéther (3).

3. Procédé selon la revendication 1 ou 2, **caractérisé en ce que** dans la deuxième étape on utilise l'organopolysiloxane (2) en des quantités de 0,1 à 0,6 atome-gramme d'hydrogène lié à Si par mole de double liaison aliphatique dans le polyéther (3).

4. Procédé selon l'une quelconque des revendications 1 à 3, **caractérisé en ce qu'**on utilise les organopolysiloxanes (1) et (2) au total en des quantités de 0,5 à 1,0 atome-gramme d'hydrogène lié à Si par mole de double liaison aliphatique dans le polyéther (3).

5. Procédé selon l'une quelconque des revendications 1 à 4, **caractérisé en ce qu'**on utilise comme organopolysiloxanes (1) ceux de formule générale

   $$H_hR_{3-h}SiO(SiR_2O)_o(SiRHO)_pSiR_{3-h}H_h \qquad (III)$$

   dans laquelle R a la signification indiquée plus haut pour ce symbole,
   h est 0, 1 ou 2,
   o est 0 ou un nombre entier valant de 1 à 40 et
   p est 0 ou un nombre entier valant de 1 à 40,
   étant entendu qu'au moins 2 atomes d'hydrogène liés à Si sont contenus.

6. Procédé selon l'une quelconque des revendications 1 à 5, **caractérisé en ce qu'**on utilise comme organopolysiloxanes (2) ceux de formule générale

   $$H_gR_{3-g}SiO\,(SiR_2O)_r(SiRHO)\,_gSiR_{3-g}H_g \qquad (V)$$

   dans laquelle R a la signification indiquée plus haut pour ce symbole,
   g est 0, 1 ou 2,
   r est 0 ou un nombre entier valant de 1 à 500 et
   s est 0 ou un nombre entier valant de 1 à 100,

étant entendu qu'au moins 2 atomes d'hydrogène liés à Si sont contenus.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3133869 C1
- US 4417068 A
- DE 69918588 T2
- US 5869727 A